Europäisches Patentamt

European Patent Office

Office européen des brevets

(11) Numéro de publication: **0 262 716**
**A2**

## (12) DEMANDE DE BREVET EUROPEEN

(21) Numéro de dépôt: 87201739.7

(51) Int. Cl.⁴: **A47J 27/00** , **A47J 27/62**

(22) Date de dépôt: **11.09.87**

(30) Priorité: **26.09.86 BE 2061062**

(43) Date de publication de la demande:
**06.04.88 Bulletin 88/14**

(84) Etats contractants désignés:
**AT CH DE FR GB GR LI LU NL SE**

(71) Demandeur: **Lahaye, Jacqueline**
**Granvellelaan 80**
**B-2210 Borsbeek(BE)**

Demandeur: **Caluwaerts, Dirk**
**Ploegstraat 37**
**B-2660 Willebroek(BE)**

(72) Inventeur: **Lahaye, Jacqueline**
**Granvellelaan 80**
**B-2210 Borsbeek(BE)**
Inventeur: **Caluwaerts, Dirk**
**Ploegstraat 37**
**B-2660 Willebroek(BE)**

(74) Mandataire: **Donné, Eddy**
**M.F.J.Bockstael Arenbergstraat 13**
**B-2000 Anvers(BE)**

(54) **Dispositif pour le contrôle de la cuisson de légumes.**

(57) Dispositif pour le contrôle de la cuisson de légumes caractérisé en ce qu'il est substantiellement constitué par deux aiguilles (6, 7), placées l'une à côté de l'autre, pouvant être poussées l'une vers l'autre, afin de permettre de glisser une pomme de terre sur l'une de leurs extrémités. Les deux extrémités des aiguilles sont combinées avec des moyens, qui émettent un signal quand les aiguilles (6) et (7) s'éloignent l'une de l'autre, et des moyens qui tentent d'éloigner les aiguilles (6) et (7) l'une de l'autre avec une force bien précisée.

Fig. 2

## Dispositif pour le contrôle de la cuisson de légumes

Cette invention se rapporte à un dispositif pour le contrôle de la cuisson de légumes. Plus spécialement cette invention se rapporte à un moyen, qui permet de définir d'une façon efficace et certaine, le moment où les légumes et en particulier des pommes de terre sont cuites.

Il est connu que lors de la cuisson de légumes, plus spécialement des pommes de terre, il est difficile de déterminer le moment où les légumes, le cas échéant les pommes de terre, sont cuites à fond.

En effet, il arrive souvent que les pommes de terre bien que cuites à l'extérier sont encore dure à l'intérieur, ou bien que les pommes de terre sont tellement cuites qu'elles tombent en morceaux.

Il est également connu, que pour contrôler la cuisson plus spécialement des pommes de terre, on utilise en général des moyens mécaniques, tel que par exemple une fourchette, afin de contrôler, par piquage, la cuisson des pommes de terre.

Cette façon de procéder ne donne aucune garantie concernant la cuisson, d'une part, et le moment auquel on pique les pommes de terre, n'est pas précis, d'autre part, ce qui signifie que c'est un procédé tout à fait arbitraire qu'on utilise, soit trop précoce, soit trop tardif et qui a comme conséquence, que les pommes de terre sont encore trop dûres ou tombent en morceaux.

Cette invention se rapporte à un dispositif, qui permet de déterminer d'une façon sûre le moment de la cuisson des légumes, en particulier des pommes de terre.

Afin d'arriver à ce résultat, ce dispositif comporte deux aiguilles, placées l'une à côte de l'autre, pouvant être poussées l'une vers l'autre, afin de permettre de glisser une pomme de terre sur les deux aiguilles, qui sont constituées, à l'autre bout, avec des moyens, qui émettent un signal quand les aiguilles s'éloignent l'une de l'autre, et des moyens qui tentent d'eloigner, avec un effort bien déterminé, les aiguilles l'une de l'autre.

Pour mieux faire comprendre les caractéristiques de cette invention, une exécution préférentielle est décrite ci-après, sans aucune limitation, en se référant aux dessins annexés dans lesquels:

la figure 1 représente d'une façon schématique et en coupe une casserole remplie de pommes de terre pourvue du dispositif selon l'invention;

la figure 2 représente le dispositif selon la figure 1 introduit dans un pomme de terrre;

la figure 3 représente une vue identique à celle de la figure 2, le dispositif étant représenté en état libre.

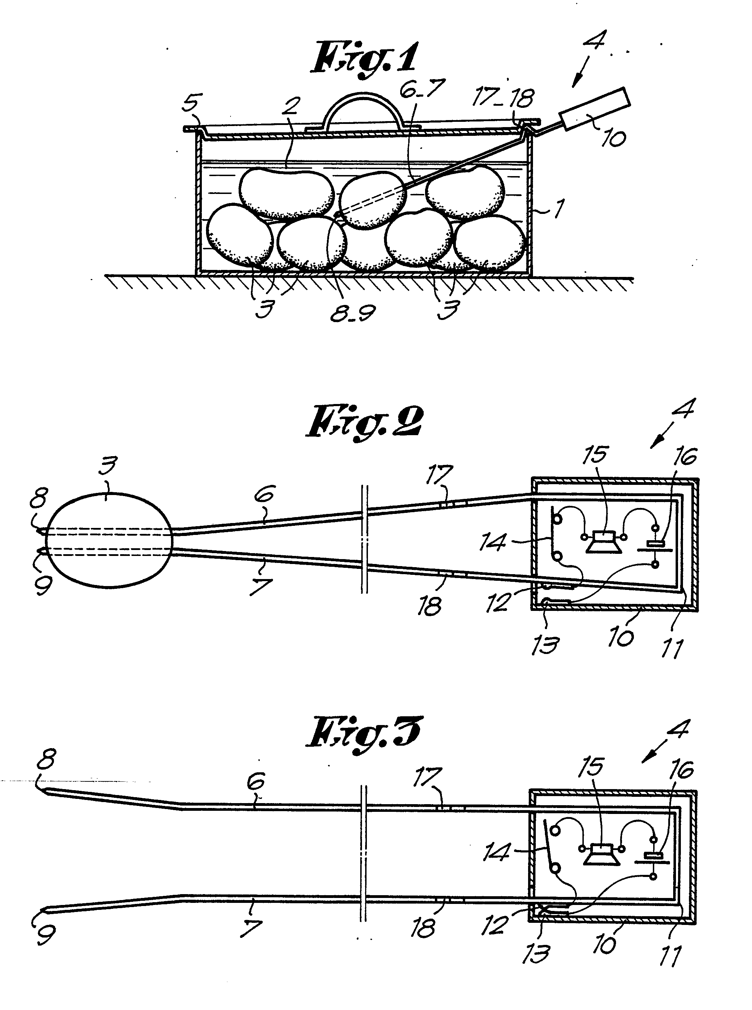

La figure 1 montre une casserole 1 remplie d'eau 2 et de pommes de terre 3. Dans l'une des pommes de terre est introduit un dispositif 4 selon l'invention suspendu au bord de 5 de la casserole 1.

Le dispositif 4 est substantiellement constitué par deux aiguilles respectievement 6 et 7, dont les extrémités libres, respectievement 8 et 9 sont de préférence pointues. Les autres extrémités des aiguilles 6 et 7 sont monteés dans un boîtier 10, de sorte qu'au moins une des deux aiguilles puisse pivoter, par exemple autour d'une charniére 11, oui ou non imaginaire.

Dans l'exemple représenté, un premier élément de contact 12 a étémonté sur l'aiguille 7 et un deuxième élément de contact 13 sur le boîtier 10. Les deux éléments 12-13 sont en contact quand le dispositif se trouve en état libre, le contact 12 étant à ce moment par l'intermediaire d'un interrupteur 14, utilisable de l'extérieur du boîtier 10, un moyen de signalisation, vibreur, sonnette ou autre 15, et une source d'énergie 16, relié a l'élément de contact 13.

Dans les aiguilles 8 et 9, à des endroits bien précis, sont prévus des enfoncements ou encoches 17 et 18, qui permettent de suspendre le dispositif sur le bord 5 de la casserole.

Il est évident que les moyens mentionnés pour suspendre le dispositif sur le bord 5 de la casserole 1, ainsi que la réalisation des aiguilles 6 et 7 et le montage de celles-ci dans le boîtier 10, peuvent se réaliser de différentes manières et en toutes formes et dimensions.

Les aiguilles 6 et 7 sont réalisées en une matiére pouvant résister à une température audessus de 100 degré centrigrade. Au cas que les aiguilles sont réalisées en métal, l'élément de contact 12 sera évidemment isolé électriquement de l'aiguille corespondante.

En plus une ou les deux aiguilles 6 et 7 peuvent être mobiles. Ces aiguilles peuvent être réalisées dans une matiére oui ou non élastique. Les extrémités, comme représentées dans les dessins, peuvent oui ou non diverger sur une certaine longueur; etc. Il est à remarquer qu'il est possible de prévoir des moyens pour règler l'élasticité des aiguilles 6 et 7. Ces moyens peuvent être constitués, par exemple, par un pont qui relie les aiguilles 6 et 7 et pouvant se mouvoir le long de la longueur des aiguilles; un ressort peut être engagé entre les aiguilles. De préférence il faut veiller à ce que les aiguilles 6 et 7 soient plus lourdes devant les encoches 17-18 qu'au delà de celles-ci, de façon qu'elles pèsent plus que le boîtier 10 avec son contenu, afin de garder le dipositif stable dans n'importe quelle position.

Il est également possible de remplacer ou de combiner le vibreur 15 avec une lampe; de remplacer la source d'énergie 16 par un élément transformant la chaleur de la casserole en électricité ; une cellule solaire ou autre.

Le boîtier 10 est de préférence réalisé en une matière artificielle, tandis que la source d'énergie 16 pourrait être du type bouton.

Bien qu'il à été décrit ci-dessus, que le dispositif fonctonne avec une source d'énergie 16, il est évidemment possible de réaliser un tel dispositif d'une façon mécanique, de telle manière que l'écartement des aiguilles 6 et 7 a comme conséquence qu'une sonnette mécanique, un battant ou autre, monté dans le boîtier 10 soit influencé. Une telle réalisation pourrait être appliquée, par exemple dans le cas de casseroles à pression. Dans ce cas, il serait en effet possible de dimensionner le dipositif d'une telle manière qu'il puisse être installé dans la casserole à pression et de prévoir sur le boîtier 10, par exemple un aimant, pour le fixer sur les parois intérieures ou le couvercle de la casserole à pression, de telle façon que le signal, par transmission, soit entendu à l'extérieur de la casserole à pression; en prévoyant une sorte de battant, qui quand les aiguilles s'ecartent à raison que la pomme de terre est cuite, tappe contre la paroi de la casserole à pression; etc.

L'utilisation du dispositif selon l'invention est simple et comme décrit ci-dessous.

Afin de mettre l'appareil en position de service il suffit de rapprocher les aiguilles 6 et 7 et de fixer sur les extrémités une pomme de terre 3, comme représenté dans le dessin 2.

Par ce fait l'interrupteur, formé par les contacts 12 et 13 s'ouvre automatiquement. L'interrupteur 14 se ferme à ce moment et la pomme de terre avec le dispositif 4 comme représenté dans la figure 1 est installée, soit dans, soit sur la casserole 1.

Afin de controler le fonctionement du dispositif, il est possible de fermer préalablement l'interrupteur 14, de façon que le vibreur 15 se met à fonctionner prouvant que le dispositif est utilisable. Le vibreur sera automatiquement mis hors circuit quand les aiguilles 6 et 7 sont rapprochées l'une de l'autre pour fixer une pomme de terre 3 sur leurs extrémités.

Ensuite le dispositif avec la pomme de terre 3 est mis dans l'eau et l'eau est porté à ébullition. Par le choix judicieux de l'élasticité des aiguilles 6 et 7, on obtient qu'au moment où la pomme de terre est cuite, les aiguilles 6 et 7 s'éloignent l'une de l'autre et mettant les éléments de contact 12 et 13 en contact de manière que le vibreur 15 émet un signal.

Il est évident qu'on obtient ainsi un dispositif permettant de déterminer avec certitude quand les pommes de terre sont cuites, sans qu'il soit nécessaire de les surveiller ou d'intervenir d'une façon ou d'une autre.

L'invention n'est pas limitée au dispositif décrit, mais peut être réalisée en plusieures dimensions et formes sans sortir du cadre de l'invention.

## Revendications

1.-Dispositif pour le contrôle de la cuisson de légumes caractérisé en ce qu'il est substantiellement constitué par deux aiguilles (6,7), placées l'une à côte de l'autre, pouvant être poussées l'une vers l'autre, afin de permettre de glisser une pomme de terre sur l'une de leurs extrémités. Les deux extrémités des aiguilles sont combinées avec des moyens, qui émettent un signal quand les aiguilles (6) et(7) s'éloignent l'une de l'autre, et des moyens qui tentent d'éloigner les aiguilles (6) et (7) l'une de l'autre avec une force bien précisée.

2.-Dispositif selon la revendication 1, caracterisé en ce que les deux extrémités des aiguilles (6-7) sont reliées à un circuit de courant électrique comportant un moyen de signalisation (15).

3.-Dispostitif selon la revendication 1, caractérisé en ce que les deux extrémités des aiguilles (6-7) sont reliées à un signal mécanique, tel qu'une sonnette, un battant ou autre.

4.-Dispositif selon l'une des revendicatios précédentes, caractérisé en ce que les deux extrémités des aiguilles (6-7) sont introduites dans un boîtier (10) comportant également ledit moyen de signalisation (15).

5.-Dispositif selon la revendication 4, caractérisé par le fait qu'au moins une des aiguilles (6-7) est mobile par rapport au boîtier (10) et est pourvue d'un élément de contact (12) pouvant coopérer avec un élément de contact (13) fixé dans le boîtier (10), le circuit électrique entre ces deux éléments de contact (12-13) est formé par un deuxième interrupteur (14), au moyen de signalisation (15) et une source d'énergie (16).

6.-Dispositif selon la revendication 5, caractérisé par le fait qu'au moins une aiguille (6-7) est pivotable autour d'une charnière oui ou non imaginaire (11).

7.-Dispositif selon la revendication 5, caractérisé en ce que la source d'énergie (16) est constituée par une batterie.

8.-Dispositif selon la revendication 5, caractérisé en ce que la source d'énergie (16) est constituée par une cellule solaire.

9.-Dispositif selon la revendication 5, caractérisé en ce que la source d'énergie (16) est constituée par un élément pouvant transformer la chaleur en électricité.

10.-Dispositif selon l'une des revendications précédentes,caracterisé en ce que le moyen de signalisation (15) est constitué par au moins un vibreur.

11.-Dispositif selon l'une des revendications 1 à 9 caracterisé en ce que le moyen de signalisation (15) est constitué par au moins une lampe.

12.-Dispositif selon l'une des revendications et suivant lequel les aiguilles (6-7) sont fabriquées en métal.

13.-Dispositif selon l'une des revendications 1 à 11, caraterisé en ce que les aiguilles (6-7) sont fabriquées en une matiére artificielle thermodurcissable.

14.-Dispositif selon la revendication 12 ou 13, caracterisé en ce que les aiguilles (6-7) sont élastiques.

15.-Dispositif selon la revendication 12 ou 13, caracterisé en ce que les extrémités libres des aiguilles (6-7) sont pointues.

16.-Dispositif selon la revendication 12 ou 13, caracterisé en ce que les extrémités des aiguilles (6-7) divergent sur une longueur de 5 à 10 cm.

17.-Dispositif selon la revendication 12 ou 13, caracterisé en ce que les aiguilles (6-7) présentent des encoches (17-18) placées d'une telle maniére, que la partie du dispositif devant les encoches (17-18) est plus lourde que la partie située au delà de ces encoches, plus spécialement la partie comportant le boîtier (10).

18.-Dispositif selon la revendication 5, caracterisé en ce que le deuxieme interrupteur (14) est commandé de l'exterieur du boîtier (10).

19.-Dispositif selon l'une des revendications précédentes, caracterisé en ce que les aiguilles (6-7) sont reliées l'une ou l'autre par un pont mobile le long de leur longueur est qui permet de régler leur élasticité.

20.-Dispositif selon l'une des revendications 1 à 18, caracterisé en ce qu'entre les aiguilles (6-7) est prévu un ressort de traction.

21.-Dispositif selon l'une des revendications 1 à 18; caracterisé en ce qu'entre les aiguilles (6-7) est prévu un ressort de pression.

22.-Dispositif selon l'une des revendications 1 à 18, caracterisé en ce qu'entre au moins une aiguille (6-7) et le boîtier (10) est prévu un ressort de traction.

23.-Dispositif selon l'une des revendications précédentes, caractérisé en ce que les boîtiers (10) sont équipés de moyens, par exemple un aimant, permettant de fixer le dispositif à la paroi de la casserolle.

Fig.1

Fig.2

Fig.3